# EUROPEAN PATENT SPECIFICATION

(11) **EP 3 444 539 B1**
(45) Date of publication and mention of the grant of the patent: **06.01.2021**
(21) Application number: 17186633.8
(22) Date of filing: 17.08.2017
(51) Int. Cl.: F24S 50/20, F24S 30/40

(54) **APPARATUS FOR MOUNTING A SOLAR ENERGY DEVICE**
VORRICHTUNG ZUR MONTAGE EINER SOLARENERGIEVORRICHTUNG
APPAREIL DE MONTAGE POUR UN DISPOSITIF À ÉNERGIE SOLAIRE

(43) Date of publication of application: 20.02.2019
(73) Proprietor: Vestel Elektronik Sanayi ve Ticaret A.S., 45030 Manisa (TR)
(72) Inventor: KÜÇÜKSAHÍN,, Oguzhan, 45030 Manisa (TR)
(74) Representative: Flint, Adam

(56) References cited:
- WO-A2-2006/118912
- GB-A- 1 552 671
- GB-A- 1 562 912
- JP-A- 2005 090 889

## Description

### Technical Field

The present disclosure relates to an apparatus for mounting a solar energy device.

### Background

Solar energy devices, including for example solar panels and the like, are of growing importance. Solar farms are used for example to generate electric power or heat by using a large number of solar panels. Some apparatus for supporting the solar panels enable the solar panel to be repositioned, for example to track the (apparent) movement of the Sun during the day.

JP2005090889A discloses an automatic solar follow-up-system which makes a solar panel, of which the centre is supported on a mount by a spherical sliding bearing, follow according to the change of the incidence angle of sunlight. Four points located at the equal distance on the north, south, east and west from the spherical sliding bearing for supporting the solar panel are supported by rods connected to four independent air cylinders.

WO2006118912A2 discloses a device which keeps an alignment with a light source. The device is self-sufficient, in that the light source both directs the movement of the device and provides the energy for the device to realign itself if the source of illumination changes position.

GB1552671A discloses a solar-powered heliostat having an array of hollow substantially triangular members fitted together so as to form a hollow inverted pyramid arrangement whose internal surface is able to absorb solar radiation, and a composite support stem comprising a bundle of longitudinally extensible hollow tubes.

GB1562912A discloses an automatic heliostat mechanism which uses a Fresnel lens to focus solar energy on to a solar cell, and fluid reservoirs to power a servo mechanism which causes the heliostat to follow the Sun's azimuth path.

### Summary

According to a first aspect disclosed herein, there is provided apparatus for mounting a solar energy device, the apparatus comprising:
a support to which a solar energy device may be mounted so as to be movable to track movement of the Sun;
a gas container for containing a gas; and
a solar heating device constructed and arranged to receive solar energy and to cause the received solar energy to heat a gas in use;
the apparatus being arranged such that heating of the gas by solar energy received at the solar heating device causes the gas container to expand so as to drive movement of a solar energy device mounted to the support in use; wherein the gas container is located so as to be beneath a solar energy device mounted to the support in use and is positioned off a support axis of the support, the solar heating device being located so as to be beneath a solar energy device mounted to the support in use and being positioned on the opposite side of the support axis of the support from the gas container, wherein the gas container is in the form of an expandable balloon located at the top of the support and in contact with the solar energy device or a frame which carries the solar energy device in use so as to directly drive movement of the solar energy device mounted to the support in use.

In examples, this provides an arrangement that causes a solar energy device to track movement of the Sun which does not require any motors or electronic controller or the like. This arrangement is particularly straightforward and efficient in terms of construction and operation. With this arrangement, if sunlight strikes the solar heating device, this means that that portion of the solar energy device needs to be lowered in order to catch the sunlight. This is achieved by having the expandable balloon on the opposite side to the solar heating device, thus driving the opposite side of the solar energy device upwards in use.

In an example, the expandable balloon is arranged so as to be in contact with the solar energy device or a frame which carries the solar energy device in use so as to directly drive movement of the solar energy device mounted to the support in use.

In an example, not part of the present invention, the expandable balloon is arranged to drive movement of a mechanical arrangement which drives movement of a solar energy device mounted to the support in use.

The mechanical arrangement may comprise one or more levers or the like which, in turn, are in contact with the solar energy device in use, or at least in contact with a frame or mount or the like which carries the solar energy device. That is, in this example, the expandable balloon effectively indirectly drives movement of the solar energy device.

In an example, the apparatus comprises gas contained only in the expandable balloon, and comprises a heat transfer arrangement for transferring heat from the solar heating device to the expandable balloon to heat the gas within the expandable balloon.

In another example, the apparatus comprises gas contained in a reservoir which is separate from the expandable balloon and which is heatable by heat from the solar heating device, and comprises a gas conduit for conducting heated gas from the reservoir to the expandable balloon to cause the expandable balloon to expand.

In an example, the apparatus comprises plural solar heating devices and plural corresponding expandable balloons, the support being constructed and arranged such that a solar energy device mounted to the support in use is movable about a corresponding plurality of axes of rotation, the arrangement being such that heating of gas by solar energy received at a solar heating device causes the corresponding expandable balloon to expand so as to drive movement of a solar energy device mounted to the support in use about the corresponding axis of rotation.

In an example, the apparatus comprises three solar heating devices and three corresponding expandable balloons, the support being constructed and arranged such that a solar energy device mounted to the support in use is movable about three axes of rotation.

In an example, the apparatus comprises a solar energy device mounted to the support.

### Brief Description of the Drawings

To assist understanding of the present disclosure and to show how embodiments may be put into effect, reference is made by way of example to the accompanying drawings in which:
Figure 1 shows schematically a perspective view of an example of an apparatus for mounting a solar energy device; and
Figure 2 shows schematically a plan view from above of certain components of the apparatus of Figure 1.

### Detailed Description

A solar power system typically employs a number of solar energy devices, which convert incident solar energy into another form of energy, such as electrical energy or thermal energy. A solar energy device may be in the form of for example a solar panel, which has a number of solar cells, which generate electrical power from incident solar energy. A solar cell is an electrical device that converts the energy of light into electricity. A solar cell may be for example a photovoltaic device which is a semiconductor device that converts light energy directly into electricity by the photovoltaic effect. As an alternative, the solar energy device may be in the form of "concentrators", which concentrate the solar energy into a small area. The heat energy may be used directly or may be used to drive for example a heat engine which in turn is connected to an electrical power generator for producing electrical energy.

In some solar power systems, the solar energy device is moved or repositioned over time so as to at least partially track the (apparent) movement of the Sun during the day so as to maximise the amount of solar energy that is incident on the solar energy device during the day. For maximum efficiency, the angle of incidence on the solar energy device is minimised. That is, the light-receiving surface of the solar energy device is preferably maintained at or as close to 90° to the direction of the Sun as practical.

A large number of solar panels may be grouped together to form a so-called "solar park" or "solar farm". A solar farm may have for example hundreds or thousands of solar panels and up to hundreds of thousands or more solar panels. In some known solar farms, each solar panel can be individually moved so as to at least partially track the position of the Sun during the day. For example, it is known to use single axis trackers and dual axis trackers, which have one and two axes of rotation respectively.

Many known arrangements for causing a solar energy device to move to track the Sun are relatively complex, requiring at least electric motors and often some arrangement of sensors and an electronic controller to control the movement. This means that such arrangements often need some power supply. This in turn either requires some external power supply, which is not always possible or convenient (especially in remote or inaccessible areas), or consumes power that is generated by the solar energy device, thus reducing the power that is available for other purposes. Moreover, electric motors and their associate mechanisms may fail and/or need maintenance, which again may not always be convenient or possible. The use of electric motors, sensors and electronic controllers, etc. also increases the capital cost.

In examples described herein, apparatus for mounting a solar energy device has a support to which a solar energy device may be mounted so as to be movable to track movement of the Sun. The apparatus has an expandable gas container for containing a gas. A solar heating device receives solar energy and causes the received solar energy to heat a gas in use. Heating of the gas by solar energy received at the solar heating device causes the expandable gas container to expand so as to drive movement of a solar energy device mounted to the support in use.

This avoids the need for motors, sensors and controllers and the like, reducing the capital cost and the need for a power supply and reducing maintenance requirements. The solar energy device can track the movement of the Sun autonomously.

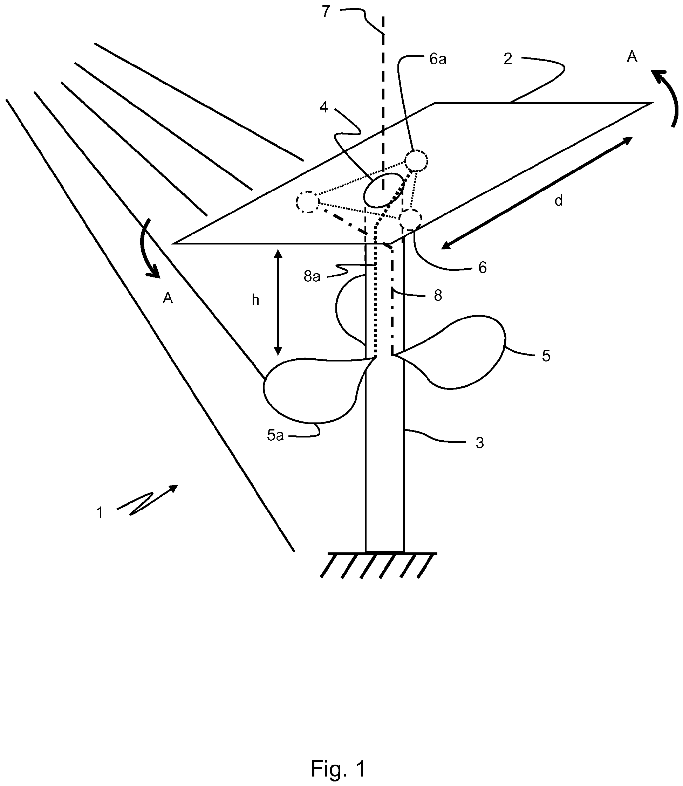

Referring to Figure 1, there is shown a schematic perspective view of an example of apparatus 1 for mounting a solar energy device 2. The solar energy device 2 may be for example in the form of a solar panel, which has a number of solar cells, which generate electrical power from incident solar energy. A solar cell is an electrical device that converts the energy of light into electricity. A solar cell may be for example a photovoltaic device which is a semiconductor device that converts light energy directly into electricity by the photovoltaic effect. As an alternative, the solar energy device 2 may be in the form of "concentrators", which concentrate the solar energy into a small area. The heat energy may be used directly or may be used to drive for example a heat engine which in turn is connected to an electrical power generator for producing electrical energy.

The apparatus 1 has a support 3 on which the solar energy device 2 is mounted. The solar energy device 2 may be mounted directly on the support 3. Alternatively, the support 3 may have a frame or the like in which the solar energy device 2 may be mounted. The support 3 has a pivotable connection 4 at its upper end to which the solar energy device 2 is mounted, which enables the solar energy device 2 to move to track the movement of the Sun during the day. The pivotable connection 4 may for example be a ball and socket connection or the like.

The support 3 has one or more solar heating devices 5. In the specific example shown, there are three solar heating devices 5. The solar heating devices 5 are arranged in use below the solar energy device 2. In the example shown, the solar heating devices 5 are fixedly mounted to the columnar support 3 to project radially outwards below the solar energy device 2. The solar heating devices 5 absorb sunlight and heat up in use. As such, the solar heating devices 5 may be of a dark or black material that is a good absorber of sunlight to maximise the heating effect. The solar heating devices 5 in an example are formed of carbon.

The apparatus 1 further has one or more expandable gas containers 6. In the example shown, there are three expandable gas containers 6. Each expandable gas container 6 is in communication with a respective solar heating device 5. A number of different arrangements of this are possible, which will be discussed further below. However, briefly, when a solar heating device 5 is heated due to sunlight being incident on the solar heating device 5, this causes the corresponding expandable gas container 6 to expand, which, in turn, drives movement of the solar energy device 2.

The expandable gas containers 6 in the invention are located at the top of the support 3 and are in contact with the solar energy device 2 (or equivalently in contact with the frame or mount of the solar energy device 2). The expandable gas containers 6 in the invention are in the form of balloons. The expandable gas containers 6 contain a gas or mixture of gases. Suitable examples include helium and air.

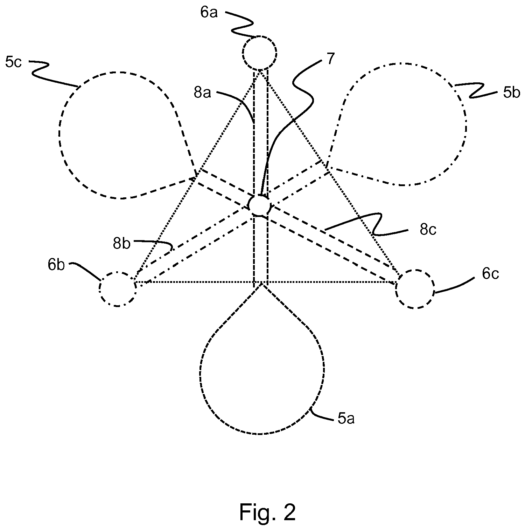

As illustrated also in Figure 2, each expandable gas container 6 is positioned off the support axis 7 of the support 3, i.e. in this example the central longitudinal axis of eh support 3 which is vertical in use. The solar heating devices 5 are likewise positioned off the support axis 7 of the support 3. Moreover, each expandable gas container 6 is in communication with the oppositely located solar heating device 5. This is illustrated in the figures by dotted lines for a first expandable gas container 6a which is in communication with the oppositely located solar heating device 5a, by dashed and dotted lines for the second expandable gas container 6b which is in communication with the oppositely located solar heating device 5b, and by dashed lines for the third expandable gas container 6c which is in communication with the oppositely located solar heating device 5c.

The effect of this can be seen from Figure 1. Assume for the moment that the solar energy device 2 is already positioned so as to face the Sun directly (i.e. the angle of incidence of the sunlight on the solar energy device 2 is 90° or approximately so). In that case, each solar heating device 5 is either in the shadow of the solar energy device 2 or is equally exposed to sunlight (depending on how large the solar heating devices 5 are compared to the solar energy device 2 and therefore whether they project beyond the shadow of the solar energy device 2). Accordingly, the solar heating devices 5 are all either not heated by the Sun or are heated by the same amount. Either way, this results in no movement of the solar energy device 2 because the expandable gas containers 6 either do not expand or expand by the same amount.

On the other hand, if as illustrated in Figure 1 the solar energy device 2 is not positioned so as to face the Sun directly (i.e. the angle of incidence of the sunlight on the solar energy device 2 is not 90°, and perhaps some way off being 90°), then one or two of the solar heating devices 5 (but not all of the solar heating devices 5) will receive sunlight because the one or two of the solar heating devices 5 will lie outside the shadow of the solar energy device 2. In Figure 1, one solar heating device 5a is exposed to sunlight. This causes the corresponding, oppositely located expandable gas container 6a to expand. This drives that oppositely located side of the solar energy device 2 upwards, with the solar energy device 2 pivoting on the pivotable connection 4 as indicated by arrows A. The effect of this is that the solar energy device 2 is driven to face the Sun. This movement continues until the relevant solar heating device 5a is no longer exposed to sunlight because the movement of the solar energy device 2 causes that solar heating device 5a to be in the shadow of the solar energy device 2.

Accordingly, this provides a simple, cost-effective and low maintenance arrangement for causing a solar energy device 2 to autonomously track movement of the Sun as the Sun moves during the day.

In the example shown, the solar heating devices 5 are located at a distance h that is half the length d of a side of the solar energy device 2. (In the case that the solar energy device 2 is rectangular say, this may be the length d of a long side of the solar energy device 2.) This leads to a generally efficient operation, as it presents a compromise between having the solar heating devices 5 too high up the support 3 and therefore often in the shadow of the solar energy device 2 and having the solar heating devices 5 too low on the support 3 and therefore often in sunlight unnecessarily.

As mentioned, various different arrangements for causing heating of the solar heating devices 5 to drive movement of the solar energy device 2 are possible. Some examples will now be discussed.

In the invention, the expandable gas containers 6 are in contact with the solar energy device 2 (or equivalently in contact with the frame or mount of the solar energy device 2). The communication between each expandable gas container 6 and its respective solar heating device 5 may be a thermal connection such that heat from the solar heating device 5 is transferred to the expandable gas container 6 if sunlight is incident on the solar heating device 5. This transfer of heat may be via thermally conductive wires or pipes 8, such as for example heat pipes. The connection of the solar heating devices 5a, 5b, 5c with their respective expandable gas containers 6a, 6b, 6c via respective heat pipes 8a, 8b, 8c or the like is again shown in the figures.

In another example, the solar heating devices 5a, 5b, 5c may themselves contain a gas or mixture of gases and the connections between the solar heating devices 5a, 5b, 5c and the respective expandable gas containers 6a, 6b, 6c may be gas conduits 8a, 8b, 8c such as hollow pipes or tubing or the like. In this example, the solar heating devices 5a, 5b, 5c are hollow rigid bodies. As a solar heating device 5 is heated by sunlight, the gas inside the solar heating device 5 heats and expands, causing the expanding gas to flow along the connection 8 to cause the corresponding expandable gas container 6 to expand.

In another example, gas is contained in one or more separate reservoirs or containers, which are separate from the expandable gas containers 6. The or each separate reservoir is in fluid communication with a respective expandable gas container 6 via a respective gas conduit. The or each separate reservoir is heated by heat from a solar heating device 5, causing the gas to expand and flow along the respective conduit to the respective expandable gas container 6, causing the expandable gas container 6 to expand to move the solar energy device 2.

In yet another example, not part of the present invention, the expandable gas containers 6 are not in contact with the solar energy device 2 and are instead in contact with some mechanical arrangement which drives movement of the solar energy device 2. The mechanical arrangement may comprise one or more levers and the like to drive the movement of the solar energy device 2 as the gas expands owing to heating of the corresponding solar heating device 5.

In any of the examples, three expandable gas containers 6 are used and the pivotable connection 4 for the solar energy device 2 enables the solar energy device 2 to be moved about three axes of rotation. In the example shown, these three axes of rotation are in or parallel to the plane of the solar energy device 2 and are symmetrically arranged around the support axis 7 of the support 3 (and so are 120° apart).

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. Apparatus (1) for mounting a solar energy device (2), the apparatus (1) comprising:
a support (3) to which a solar energy device (2) may be mounted so as to be movable to track movement of the Sun;
a gas container (6) for containing a gas; and
a solar heating device (5) constructed and arranged to receive solar energy and to cause the received solar energy to heat a gas in use;
the apparatus (1) being arranged such that heating of the gas by solar energy received at the solar heating device (5) causes the gas container (6) to expand so as to drive movement of a solar energy device (2) mounted to the support (3) in use; wherein
the gas container (6) is located so as to be beneath a solar energy device (2) mounted to the support (3) in use and is positioned off a support axis of the support (3), the solar heating device (5) being located so as to be beneath a solar energy device (2) mounted to the support (3) in use and being positioned on the opposite side of the support axis of the support (3) from the gas container (6), **characterised by** the gas container (6) being in the form of an expandable balloon (6) located at the top of the support (3) and in contact with the solar energy device (2) or a frame which carries the solar energy device (2) in use so as to directly drive movement of the solar energy device (2) mounted to the support (3) in use.

2. Apparatus (1) according to claim 1, comprising gas contained only in the expandable balloon (6), and comprising a heat transfer arrangement for transferring heat from the solar heating device (5) to the expandable balloon (6) to heat the gas within the expandable balloon (6).

3. Apparatus (1) according to claim 1, comprising gas contained in a reservoir which is separate from the expandable balloon (6) and which is heatable by heat from the solar heating device (5), and comprising a gas conduit for conducting heated gas from the reservoir to the expandable balloon (6) to cause the expandable balloon (6) to expand.

4. Apparatus (1) according to any of claims 1 to : 3, comprising plural solar heating devices (5) and plural corresponding expandable balloons (6), the support (3) being constructed and arranged such that a solar energy device (2) mounted to the support (3) in use is movable about a corresponding plurality of axes of rotation, the arrangement being such that heating of gas by solar energy received at a solar heating device (5) causes the corresponding expandable balloon (6) to expand so as to drive movement of a solar energy device (2) mounted to the support (3) in use about the corresponding axis of rotation.

5. Apparatus (1) according to claim 4, comprising three solar heating devices (5) and three corresponding expandable balloons (6), the support (3) being constructed and arranged such that a solar energy device (2) mounted to the support (3) in use is movable about three axes of rotation.

6. Apparatus (1) according to any of claims 1 to 5, comprising a pivotable connection (4) at the upper end of the support (3) to which a solar energy device (2) can be mounted in use.

7. 9. Apparatus (1) according to any of claims 1 to 6, comprising a solar energy device (2) mounted to the support (3).

## Patentansprüche

1. Vorrichtung (1) zum Montieren einer Solarenergievorrichtung (2), wobei die Vorrichtung (1) aufweist:
eine Stütze (3), an der eine Solarenergievorrichtung (2) so montiert werden kann, dass sie bewegbar ist, um eine Bewegung der Sonne zu verfolgen;
einen Gasbehälter (6) zum Aufnehmen eines Gases; und
eine Solarheizvorrichtung (5), die ausgestaltet und angeordnet ist, um im Einsatz Sonnenenergie zu empfangen und die empfangene Sonnenenergie ein Gas aufheizen zu lassen,
wobei die Vorrichtung (1) derart angeordnet ist, dass ein Aufheizen des Gases durch die an der Solarheizvorrichtung (5) empfangene Sonnenenergie den Gasbehälter (6) expandieren lässt, um so im Einsatz eine Bewegung einer an der Stütze (3) montierten Solarenergievorrichtung (2) antreiben zu lassen,
wobei der Gasbehälter (6) so angeordnet ist, dass er sich im Einsatz unter einer an der Stütze (3) montierten Solarenergievorrichtung (2) befindet, und außerhalb einer Stützachse der Stütze (3) positioniert ist, und die Solarheizvorrichtung (5) so angeordnet ist, dass sie sich im Einsatz unter einer an der Stütze (3) montierten Solarenergievorrichtung (2) befindet, und auf der dem Gasbehälter (6) gegenüberliegenden Seite der Stützachse der Stütze (3) positioniert ist,
**dadurch gekennzeichnet, dass** der Gasbehälter (6) in Form eines expandierbaren Ballons (6) ist, der sich am Kopfende der Stütze (3) und im Einsatz in Kontakt mit der Solarenergievorrichtung (2) oder einem Rahmen, der die Solarenergievorrichtung (2) trägt, befindet, um so im Einsatz eine Bewegung der an der Stütze (3) montierten Solarenergievorrichtung (2) direkt anzutreiben.

2. Vorrichtung (1) nach Anspruch 1, wobei Gas nur im expandierbaren Ballon (6) enthalten ist, und aufweisend eine Wärmeübertragungsanordnung zur Wärmeübertragung von der Solarheizvorrichtung (5) zum expandierbaren Ballon (6), um das Gas im expandierbaren Ballon (6) aufzuheizen.

3. Vorrichtung (1) nach Anspruch 1, aufweisend ein Gas, das in einem Reservoir enthalten ist, das vom expandierbaren Ballon (6) separat ist und das durch Wärme von der Solarheizvorrichtung (5) erwärmbar ist, und aufweisend eine Gasleitung zum Leiten von erwärmtem Gas aus dem Reservoir zum expandierbaren Ballon (6), um den expandierbaren Ballon (6) sich expandieren zu lassen.

4. Vorrichtung (1) nach einem der Ansprüche 1 bis 3, aufweisend mehrere Solarheizvorrichtungen (5) und mehrere entsprechende expandierbare Ballons (6), wobei die Stütze (3) derart konstruiert und angeordnet ist, dass im Einsatz eine an der Stütze (3) montierte Solarenergievorrichtung (2) um eine entsprechende Mehrzahl von Rotationsachsen bewegbar ist wobei die Anordnung derart ist, dass ein Aufheizen des Gases durch die an einer Solarheizvorrichtung (5) empfangene Solarenergie den entsprechenden expandierbaren Ballon (6) expandieren lässt, um so im Einsatz eine Bewegung einer an der Stütze (3) montierten Solarenergievorrichtung (2) um die entsprechende Rotationsachse anzutreiben.

5. Vorrichtung (1) nach Anspruch 4, aufweisend drei Solarheizvorrichtungen (5) und drei entsprechende expandierbare Ballone (6), wobei die Stütze (3) so konstruiert und angeordnet ist, dass im Einsatz eine an der Stütze (3) montierte Solarenergievorrichtung um drei Rotationsachsen bewegbar ist.

6. Vorrichtung (1) nach einem der Ansprüche 1 bis 5, aufweisend ein schwenkbares Verbindungsteil (4) am oberen Ende der Stütze (3), an dem im Einsatz eine Solarenergievorrichtung (2) montiert werden kann.

7. Vorrichtung (1) nach einem der Ansprüche 1 bis 6, aufweisend eine an der Stütze (3) montierte Solarenergievorrichtung (2).

## Revendications

1. Appareil (1) pour monter un dispositif à énergie solaire (2), l'appareil (1) comprenant :
un support (3) sur lequel un dispositif à énergie solaire (2) peut être monté de manière à pouvoir se déplacer pour suivre le mouvement du soleil ;
un conteneur de gaz (6) pour contenir un gaz; et
un dispositif à chauffage solaire (5) qui est construit et agencé pour recevoir de l'énergie solaire et pour amener l'énergie solaire reçue à chauffer un gaz en cours d'utilisation ;
l'appareil (1) étant agencé de sorte que le chauffage du gaz par l'énergie solaire reçue au niveau du dispositif à chauffage solaire (5) provoque l'extension du conteneur de gaz (6) de manière à entraîner le mouvement d'un dispositif à énergie solaire (2) monté sur le support (3) en cours d'utilisation ;
dans lequel le conteneur de gaz (6) est situé de manière à être sous un dispositif à énergie solaire (2) monté sur le support (3) en cours d'utilisation, et est positionné hors d'un axe de support du support (3), le dispositif à chauffage solaire (5) étant situé de manière à être sous un dispositif à énergie solaire (2) monté sur le support (3) en cours d'utilisation, et étant positionné du côté de l'axe de support du support (3) qui est opposé au conteneur de gaz (6), **caractérisé en ce que** le conteneur de gaz (6) est sous la forme d'un ballon extensible (6) situé en haut du support (3) et est en contact avec le dispositif à énergie solaire (2) ou une structure qui porte le dispositif à énergie solaire (2) en cours d'utilisation, de manière à entraîner directement le mouvement du dispositif à énergie solaire (2) monté sur le support (3) en cours d'utilisation.

2. Appareil (1) selon la revendication 1, comprenant du gaz contenu uniquement dans le ballon extensible (6), et comprenant un agencement de transfert de chaleur pour transférer de la chaleur du dispositif à chauffage solaire (5) au ballon extensible (6) pour chauffer le gaz à l'intérieur du ballon extensible (6).

3. Appareil (1) selon la revendication 1, comprenant du gaz contenu dans un réservoir qui est séparé du ballon extensible (6) et qui peut être chauffé par la chaleur du dispositif à chauffage solaire (5), et comprenant un conduit de gaz pour conduire du gaz chauffé du réservoir vers le ballon extensible (6) pour provoquer l'extension du ballon extensible (6).

4. Appareil (1) selon l'une quelconque des revendications 1 à 3, comprenant plusieurs dispositifs à chauffage solaire (5) et plusieurs ballons extensibles correspondants (6), le support (3) étant construit et agencé de telle sorte qu'un dispositif à énergie solaire (2) monté sur le support (3) en cours d'utilisation peut se déplacer autour d'une pluralité correspondante d'axes de rotation, l'agencement étant tel que le chauffage du gaz par l'énergie solaire reçue au niveau d'un dispositif à chauffage solaire (5) provoque l'extension du ballon extensible correspondant (6) de manière à entraîner le mouvement d'un dispositif à énergie solaire (2) monté sur le support (3) en cours d'utilisation autour de l'axe de rotation correspondant.

5. Appareil (1) selon la revendication 4, comprenant trois dispositifs à chauffage solaire (5) et trois ballons extensibles correspondants (6), le support (3) étant construit et agencé de telle sorte qu'un dispositif à énergie solaire (2) monté sur le support (3) en cours d'utilisation peut se déplacer autour de trois axes de rotation.

6. Appareil (1) selon l'une quelconque des revendications 1 à 5, comprenant un raccord qui peut pivoter (4) au niveau de l'extrémité supérieure du support (3) sur lequel un dispositif à énergie solaire (2) peut être monté en cours d'utilisation.

7. Appareil (1) selon l'une quelconque des revendications 1 à 6, comprenant un dispositif à énergie solaire (2) monté sur le support (3).
